# EUROPEAN PATENT SPECIFICATION

(11) **EP 0 488 966 B1**
(45) Date of publication and mention of the grant of the patent: **11.10.1995**
(21) Application number: 91830516.0
(22) Date of filing: 26.11.1991
(51) Int. Cl.: F16L 55/124

(54) **Stopper device for gas tubes**
Absperrvorrichung für Gasrohrleitungen
Moyen obturateur pour conduites de gaz

(30) Priority: 26.11.1990 IT 6793090
(43) Date of publication of application: 03.06.1992
(73) Proprietor: Ravetti, Roberto, I-15033 Casale Monferrato (Alessandria) (IT)
(72) Inventor: Ravetti, Roberto, I-15033 Casale Monferrato (Alessandria) (IT)
(74) Representative: Saconney, Piero

(56) References cited:
- EP-A- 0 148 735
- EP-A- 0 473 863
- DE-A- 3 120 183
- IT-A- 903 591
- US-A- 3 800 833
- US-A- 4 040 450
- US-A- 4 202 377

## Description

The present invention relates to a device for temporarily blocking gas pipes.

In medium-pressure gas pipes there is often a need to operate on portions of the pipe without having to cut off the gas supply to the pipe.

In low-pressure pipes, obturator balloons are introduced in the deflated configuration, under gas-tight conditions, through sleeves which are welded to the pipe at right angles. This solution is not reliable for medium and high-pressure pipes.

US-A-4 202 377 discloses a device for temporarily blocking high or medium pressure gas pipes, having the features indicated in the pre-characterising portion of appended claim 1.

The object of the present invention is to provide a blocking device which can cut off the gas supply to a portion of a medium-pressure pipe without the need to cut off the supply to the entire pipe.

According to the invention, this object is achieved by virtue of the features stated in claim 1.

By virtue of these characteristics, after two sleeves have been welded to the pipe at the ends of the portion in question and after the wall of the pipe has been drilled under gas-tight conditions by means of a suitable pipe-drilling machine, the cup-shaped bodies of the blocking devices, containing the angled obturating ends, are mounted on the sleeves with the interposition of flat valves with disc obturators. After the flat valves have been opened, each rod is then slid so that its angled obturating end is positioned in the pipe. The seal is then expanded radially by the operating means so as to lock the angled end of each rod within the pipe and form a perfect seal between the seal and the pipe so that work can be carried out safely on the isolated portion of the pipe without any danger of gas leaks.

Preferably, the circular seal is annular and has an isosceles trapezoidal cross-section.

Further advantages and characteristics of the device according to the invention will become clear from the detailed description which follows purely by way of non-limiting example, with reference to the appended drawings, in which:

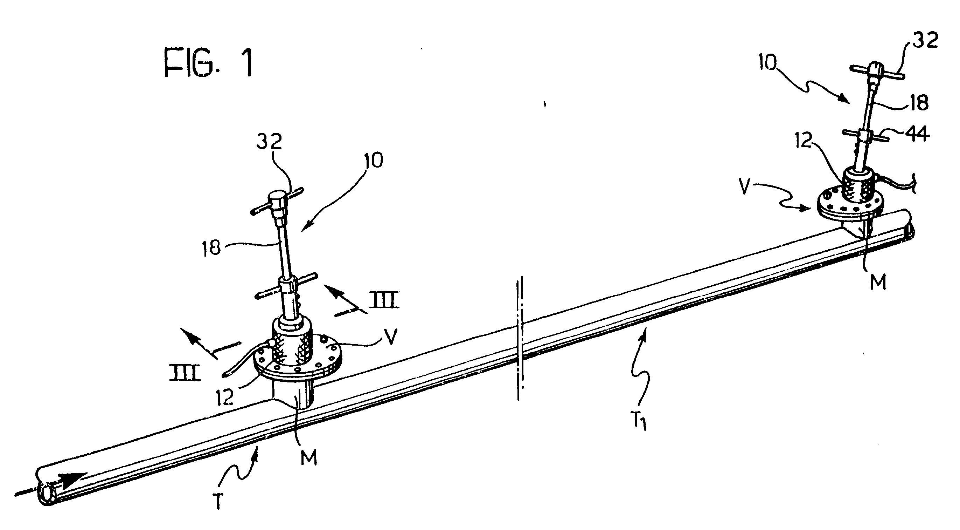

Figure 1 is a perspective view showing schematically a first embodiment of the device according to the invention, in use,
Figure 2 is a longitudinal section of the device of Figure 1 mounted on the pipe,
Figure 3 is a section taken on the line 111-111 of Figure 1,
Figure 4 is an exploded, perspective view of the device of Figures 1-3, and
Figure 5 is a variant of Figure 3 corresponding to a second embodiment of the invention.

With reference to the drawings, a device, generally indicated 10, for temporarily blocking medium-pressure gas pipes T is used to cut off the supply of gas to an intermediate portion T₁ of pipe. The device 10 includes a cup-shaped body 12 with an end wall 12a having a central hole 14 in which a hollow rod 18, the function of which will be explained in the following description, is sealingly slidable and can be inclined with the interposition of an annular seal 16 of the O- ring type.

The cup-shaped body 12 has a threaded mouth 12b which can be screwed onto a connector R of a gate valve V of the type with a disc obturator P. The mouth 12b of the cup-shaped body 12 may alternatively have a flange 2 for coupling to the valve V. The gate valve V in turn is mounted on a connecting sleeve M which is welded at right angles to the pipe T at S and in correspondence with which a through-hole F has been formed by a suitable pipe-drilling machine. The hollow rod 18 has a first end 18a to which a circular flange 20 with guide holes 20a is fixed in an angled position. The flange 20 has a conical front surface 22 facing a corresponding conical surface 24 of a compression disc 26 having guide pins 26a which are slidable in the guide holes 20a in the flange 20. A sealing ring 28 of elastomeric material with a trapezoidal cross-section is interposed between the flange 20 and the compression disc 26 and is adapted to be acted upon axially by the flange 20 and by the compression disc 26. The sealing ring 28 has an outside diameter substantially corresponding to the inside diameter of the pipe T.

The rod 18 has a second end 18b with an external thread onto which is screwed a corresponding threaded sleeve 30 which can be operated manually by a hand wheel 32. The sleeve 30 has an internal annular shoulder 30a against which a traction bush 36 bears with the interposition of a thrust ball bearing 34, a first end 38a of a metal cable 38 being fixed to the bush 36 and its second end 38b being connected to the compression disc 26.

A tubular locating element 40 slidable outside the rod 18 has two screws 42 for fixing it to the rod 18, as well as a control and locating rod 44, and an inclined end surface 46 which is intended to abut the outer surface 48 of the end wall 12a of the cup-shaped body 12.

In order to prevent gas leaks, in addition to the sealing ring 16, there are O-ring-type sealing rings 43, 45 and 47 between the operating portion 32 and the threaded sleeve 30, between the threaded sleeve 30 and the rod 18, and between the cup-shaped body 12 and the gate valve V, respectively. The cup-shaped body 12 also has a valve 50 for letting off the gas trapped in the cup-shaped body 12 upon completion of the operation on the portion of pipe T₁.

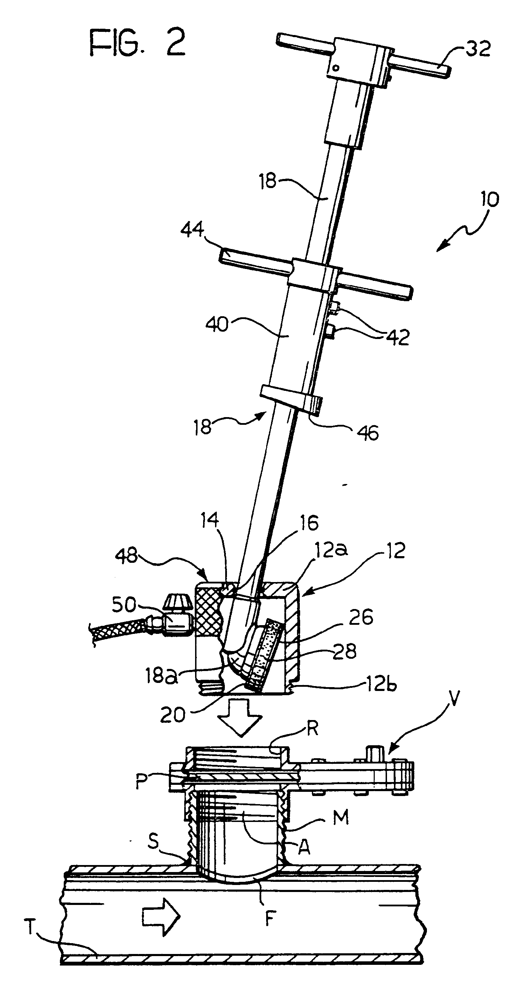

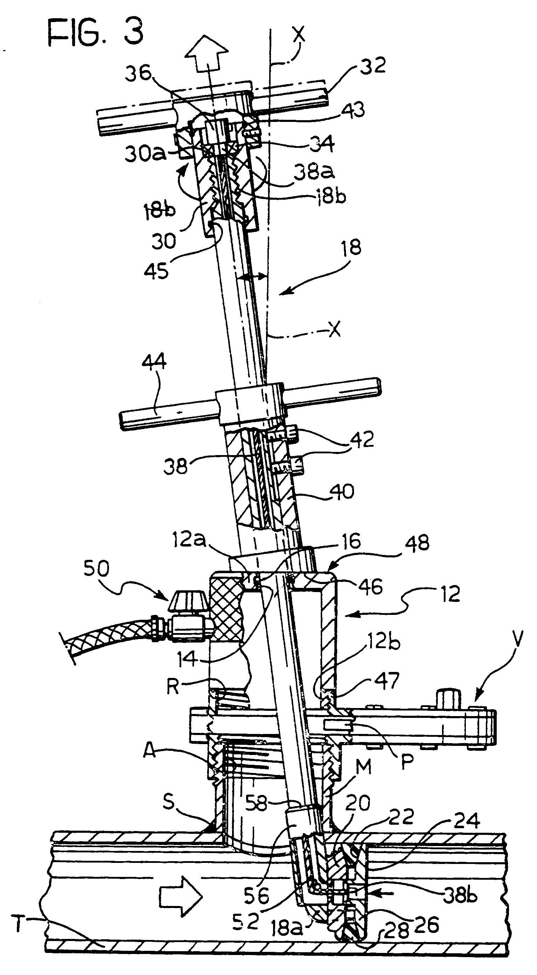

Figure 2 shows the mounting of the device 10 on the gate valve V which is in the closed configuration. At this stage, the end 18a of the rod 18 is housed completely within the cup-shaped body 12. After the body 12 has been mounted on the gate valve V, the gate obturator P is opened so that the rod 12 can slide and simultaneously rotate so as to be positioned as shown in Figure 3. The tubular element 40, which is fixed in a predetermined position on the rod 18 beforehand, enables the rod 18 to be positioned at an optimal inclination, preferably about 7° to the axis X-X of the cup-shaped body 12, and the flange 20 to be arranged perpendicular to the axis of the pipe T, by lining up the control rod 44 of the tubular element 40 with the pipe T (the control rod 44 should be within the plane in which the pipe T lies).

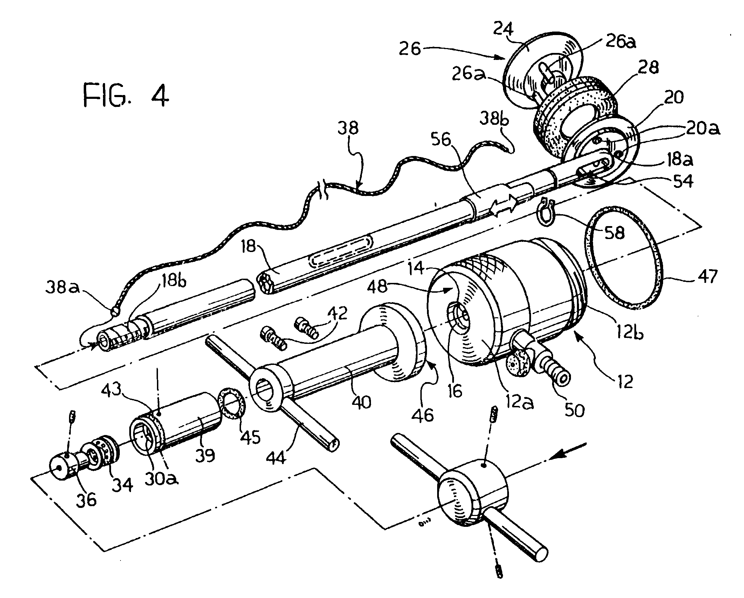

The operator then deforms the sealing ring 28 by means of the hand wheel 32 so as to pull the cable 38 which passes around a transverse pin 52 at the end 18a of the rod 18 (Figure 3). For lubrication of the sliding pin, the side of the rod 18 has a grease hole 54 (Fig. 4) which can be closed, in the configuration of use, by a slidable sleeve 56 which is locked in position by the resilient ring 58.

In order to remove the device 10, it suffices to carry out the steps indicated above in reverse. A closure plug (not shown) may be screwed, and perhaps subsequently welded, into an internal thread A in the sleeve M which is welded to the pipe T so that the gate valve V can then be removed.

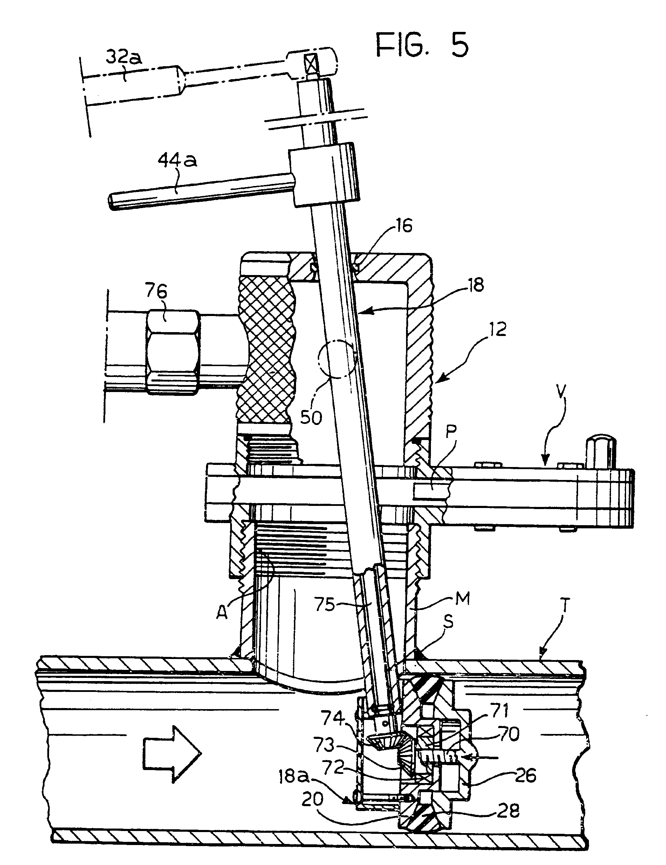

The sealing ring 28 may be resiliently deformed by a mechanical male-and-female screw system instead of by the cable 38. This control system is used in the embodiment shown in Figure 5. In this drawing, parts the same as those in Figure 3 are indicated by the same reference numerals. In the embodiment of Figure 5, the pressure disc 26 has an axial threaded shank 70 which is engaged in a female threaded member 71. The female threaded member 71 is mounted so as to be freely rotatable in the structure of the end portion 18a by means of a rolling bearing 72 and is integral with a bevel pinion 73 which meshes with a bevel pinion 74. The bevel pinion 74 is fixed to one end of a shaft 75 which is rotatable in the rod 18. The opposite end of the shaft 75 can be rotated by a lever 32a (shown in broken outline), preferably with the interposition of a ratchet mechanism of any known type (not shown in detail) so that the shaft 75 can be rotated continuously by successively pivoting the lever 32a to and fro. The tubular element 40 is not used and the correct angular positioning of the device is achieved solely with reference to a hand grip 44a. Moreover, the cup 18 has a valve 76 of known type for diverting the gas to a by-pass pipe.

In order to urge the disc 26 against the sealing ring 28, it suffices to rotate the shaft 75 by means of the lever 32a in the manner described above. The shaft 75 transmits a corresponding rotation to the female threaded member 71 by means of the pair of bevel pinions 73, 74. The axial shank 70 is forced to move axially within the female threaded member 71 since the disc 26 is prevented from rotating by the friction between the contacting surfaces of the disc 26 and of the sealing ring 28. The disc 26 is thus compressed against the seal 28 so as to expand it radially against the internal surface of the pipe T.

## Claims

1. A device for temporarily blocking gas pipes, including:
- a cup-shaped body (12) for mounting on a sleeve (M) which is welded to the pipe (T) at right angle in correspondence of a through-hole (F) provided in the pipe (T),
- a rod (18) which is slidably sealingly and centrally in a hole (14) in an end wall (12a) of the cup-shaped body (12) and has an angled obturating end (18a) including a flange (20, 26) arranged in a plane and associated with a circular seal (28) of elastomeric material which has an outside diameter substantially corresponding to the inside diameter of the pipe (T), the rod (18) being able to assume a first position, in which its angled end (18a) is housed in the cup-shaped body (12), and a second position, in which the rod (18) is arranged with its axis and the axis of the pipe (T) being in a common plane and its angled obturating end (18a) is inserted in the pipe (T) like a plug, and
- operating means (32, 30, 38, 20, 22) for expanding the seal (28) radially against the wall of the pipe (T) when the angled end (18a) of the rod (18) is in its second position,
characterised in that
- the obturating end (18a) is fixed to the rod (18) so that the axis of the rod (18) forms a predetermined acute angle with respect to the plane of the flange (20, 26) of the obturating end (18a),
- and in that the cup-shaped body (12) is so shaped that, when the rod (18) is in its second position, the rod (18) abuts simultaneously at opposite locations with respect to its axis, in correspondence of the hole (14) in the end wall (12a) of the cup-shaped body (12) and against an edge of the through-hole (F) provided in the pipe (T),
- so that the axis of the rod (18) forms with the axis of the pipe (T) a substantially complemental angle with respect to said acute angle, whereby the flange (20, 26) of the obturating end (18a) positions by itself at right angle with respect to the axis of the pipe (T).

2. A device according to Claim 1, characterised in that the operating means comprise:
- a pull cable (38) which is slidable within the rod (18) and has a first end (38b) fixed to a compression disc (26) which is in frontal contact with the seal (28) and a second end (38a) fixed to a traction bush (36), and
- a threaded sleeve (30) which is screwed onto the rod (18) and is adapted to move the traction bush (36), with the interposition of a thrust bearing (34), so as to squash the seal (28).

3. A device according to any one of the preceding claims, characterised in that a tubular abutment member (40), which is slidable coaxially on the rod (18) and can be clamped in a predetermined position, has an end with an inclined flat frontal surface (46) so that it can abut the end wall (12a) of the cup-shaped body (12) in a configuration in which it is inclined to the axis (X-X) of the cup-shaped body (12), the predetermined inclination enabling the angled obturating end (18a) of the rod (18) to be positioned in an optimal position within the pipe (T).

4. A device according to any one of the preceding claims, characterised in that the circular seal (28) is annular and has a trapezoidal cross-section.

5. A device according to Claim 1, characterised in that the operating means comprise a male-and-female screw system (70, 71).

6. A device according to Claim 5, characterised in that the male-and-female screw system includes a threaded axial shank (70) carried by a compression disc (26) which is in frontal contact with the seal (28) and a female threaded member (71) into which the shank (70) is screwed and which can be rotated by means of an operating lever (32a).

7. A device according to claim 6, characterised in that the operating lever (32a) is connected to the female threaded member (71) by a transmission including a shaft (75) which is rotatable in the rod (18) and a pair of bevel pinions (73, 74) connecting the shaft (18) to the female threaded member (73).

8. A device according to Claim 7, characterised in that the operating lever (32a) is connected to the shaft (75) with the interposition of a ratchet device.

## Patentansprüche

1. Vorrichtung zum vorübergehenden Absperren von Gasrohrleitungen, mit:
- einem becherförmigen Körper (12) zur Befestigung an einer Büchse (M), welche in einem rechten Winkel an einem Durchgangsloch (F), welches in der Rohrleitung (T) vorgesehen ist, an die Rohrleitung (T) geschweißt ist,
- einer Stange (18), welche in einem Loch (14) in einer Stirnwand (12a) des becherförmigen Körpers (12) gleitend, abdichtend und zentral vorgesehen ist und ein gewinkeltes, abdichtendes Ende (18a) mit einem Flansch (20, 26) aufweist, welcher in einer Ebene angeordnet und mit einer runden Dichtung (28) aus elastischem Material verbunden ist, welche Dichtung einen Außendurchmesser besitzt, der im wesentlichen dem Innendurchmesser der Rohrleitung (T) entspricht, welche Stange (18) eine erste Position einnehmen kann, in welcher ihr gewinkeltes Ende (18a) im becherförmigen Körper (12) untergebracht ist, und eine zweite Position einnehmen kann, in welcher die Stange (18) mit ihrer Achse so angeordnet ist, daß sie mit der Achse der Rohrleitung (T) eine gemeinsamer Ebene bildet, und in welcher ihr gewinkeltes, abdichtendes Ende (18a) in die Rohrleitung (T) wie ein Stopfen eingeschoben ist, und
- Bedienungsmitteln (32, 30, 38, 20, 22) zum Expandieren der Dichtung (28) in radialer Richtung gegen die Wand der Rohrleitung (T), wenn das gewinkelte Ende (18a) der Stange (18) in ihrer zweiten Position ist,
dadurch gekennzeichnet, daß
- das abdichtende Ende (18a) so an der Stange (18) fixiert ist, daß die Achse der Stange (18) einen vorbestimmten, spitzen Winkel zur Ebene des Flansches (20, 26) des abdichtenden Endes (18a) bildet,
- und daß der becherförmige Körper (12) so geformt ist, daß, wenn die Stange (18) in ihrer zweiten Position ist, die Stange (18) gleichzeitig an gegenüberliegenden Stellen hinsichtlich ihrer Achse anstößt, korrespondierend mit dem Loch (14) in der Stirnwand (12a) des becherförmigen Körpers (12), und gegen eine Kante des Durchgangsloches (F), welches in der Rohrleitung (T) vorgesehen ist,
- so daß die Achse der Stange (18) mit der Achse der Rohrleitung (T) einen im wesentlichen komplementären Winkel zum spitzen Winkels bildet, wodurch sich der Flansch (20, 26) des abdichtenden Endes (18a) selbst im rechten Winkel zur Achse der Rohrleitung (T) positioniert.

2. Vorrichtung gemäß Anspruch 1, dadurch gekennzeichnet, daß die Bedienungsmittel aufweisen:
- ein Zugkabel (38), welches innerhalb der Stange (18) gleiten kann und ein erstes Ende (38b) besitzt, welches an einer Kompressionsscheibe (26) fixiert ist, welche in frontalem Kontakt mit der Dichtung (28) ist, und ein zweites Ende (38a) besitzt, welches an eine Traktionsbuchse (36) fixiert ist, und
- eine gewindete Büchse (30), welche auf die Stange (18) geschraubt ist und so gestaltet ist, daß sie die Traktionsbuchse (36) über ein Axiallager (34) bewegt, um die Dichtung (28) zusammenzupressen.

3. Vorrichtung gemäß einem der vorhergehenden Ansprüche, dadurch gekennzeichnet, daß ein rohrförmiges Widerlager (40), welches auf der Stange (18) koaxial gleiten kann und in einer vorbestimmten Position festgeklemmt werden kann, ein Ende mit einer geneigten flachen frontalen Oberfläche (46) aufweist, so daß es an die Stirnwand (12a) des becherförmigen Körpers (12) in einer Konfiguration anstoßen kann, in welcher es zur Achse (X-X) des becherförmigen Körpers (12) geneigt ist, wobei die vorbestimmte Neigung ermöglicht, daß das gewinkelte, abdichtende Ende (18a) der Stange (18) in einer optimalen Position innerhalb der Rohrleitung (T) positioniert werden kann.

4. Vorrichtung gemäß einem der vorhergehenden Ansprüche, dadurch gekennzeichnet, daß die runde Dichtung (28) ringförmig ist und einen trapezförmigen Querschnitt aufweist.

5. Vorrichtung gemäß Anspruch 1, dadurch gekennzeichnet, daß die Bedienungsmittel ein Schraubsystem (70, 71) mit Außen- und Innengewinde umfassen.

6. Vorrichtung gemäß Anspruch 5, dadurch gekennzeichnet, daß das Schraubsystem mit Außen- und Innengewinde einen gewindeten, axialen Schaft (70), der von einer Kompressionsscheibe (26), welche in frontalem Kontakt mit der Dichtung (28) ist, getragen wird, und ein Element (71) mit Innengewinde, in welches der Schaft (70) gedreht wird und welches mittels eines Bedienungsgriffes (32a) gedreht werden kann, aufweist.

7. Vorrichtung gemäß Anspruch 6, dadurch gekennzeichnet, daß der Bedienungsgriff (32a) mit dem Element (71) mit Innengewinde über einen Schaft (75), der in der Stange (18) drehbar ist, und ein Paar abgeschrägter Ritzel (73, 74), die den Schaft (18) mit dem Element (71) mit Innengewinde verbinden, verbunden ist.

8. Vorrichtung gemäß Anspruch 7, dadurch gekennzeichnet, daß der Bedienungsgriff (32a) über eine Klinkenvorrichtung mit dem Schaft (75) verbunden ist.

## Revendications

1. Dispositif pour bloquer temporairement des conduites de gaz, comprenant :
- un corps (12) en forme de coupelle destiné à se monter sur une douille (M) qui est soudée à la conduite (T) à angle droit, en coïncidence avec un trou traversant (F) prévu dans la conduite (T),
- une tige (18) qui se trouve en coulissement étanche, en position centrale, dans un trou (14) ménagé dans une paroi d'extrémité (12a) du corps (12) en forme de coupelle, et a une extrémité d'obturation (18a) en angle comprenant une bride (20, 26) placée dans un plan et associée à un joint circulaire (28) en matériau élastomère, qui a un diamètre extérieur correspondant en substance au diamètre intérieur de la conduite (T), la tige (18) étant capable de prendre une première position dans laquelle son extrémité en angle (18a) est logée dans le corps (12) en forme de coupelle, et une deuxième position dans laquelle la tige (18) est placée avec son axe et l'axe de la conduite (T) situés dans un plan commun, et son extrémité d'obturation (18a) en angle est insérée dans la conduite (T) à la manière d'un bouchon, et
- un moyen d'actionnement (32, 30, 38, 20, 22) destiné à dilater le joint (28) dans le sens radial contre la paroi de la conduite (T) lorsque l'extrémité (18a) en angle de la tige (18) se trouve dans sa deuxième position,
caractérisé en ce que
l'extrémité d'obturation (18a) est fixée à la tige (18) de telle manière que l'axe de la tige (18) forme un angle aigu prédéterminé par rapport au plan de la bride (20, 26) de l'extrémité d'obturation (18a),
et en ce que le corps (12) en forme de coupelle a une forme telle que, lorsque la tige (18) se trouve dans sa deuxième position, la tige (18) est en butée simultanément en des emplacements opposés par rapport à son axe, en coïncidence avec le trou (14) ménagé dans la paroi d'extrémité (12a) du corps (12) en forme de coupelle, et contre un bord du trou traversant (F) prévu dans la conduite (T),
de sorte que l'axe de la tige (18) forme avec l'axe de la conduite (T) un angle substantiellement complémentaire par rapport audit angle aigu, la bride (20, 26) de l'extrémité d'obturation (18a) se positionnant d'elle-même à angle droit par rapport à l'axe de la conduite (T).

2. Dispositif selon la revendication 1, caractérisé en ce que le moyen d'actionnement comprend :
un câble de traction (38) qui peut glisser dans la tige (18) et a une première extrémité (38b) fixée à un disque de compression (26), qui se trouve en contact frontal avec le joint (28), et une deuxième extrémité (38a) fixée à une douille de traction (36), et
une douille filetée (30) qui est vissée sur la tige (18) et est adaptée pour déplacer la douille de traction (36), avec interposition d'un palier de poussée (34), de manière à écraser le joint (28).

3. Dispositif selon l'une quelconque des revendications précédentes, caractérisé en ce qu'un élément de butée tubulaire (40), qui peut glisser de manière coaxiale sur la tige (18) et peut être bloqué dans une position prédéterminée, a une extrémité avec une surface frontale plane inclinée (46), de sorte qu'il peut buter contre la paroi d'extrémité (12a) du corps (12) en forme de coupelle (12), dans une configuration dans laquelle il est incliné par rapport à l'axe (X-X) du corps (12) en forme de coupelle, l'inclinaison prédéterminée permettant à l'extrémité d'obturation (18a) en angle de la tige (18) d'être placée dans une position optimale à l'intérieur de la conduite (T).

4. Dispositif selon l'une quelconque des revendications précédentes, caractérisé en ce que le joint circulaire (28) est annulaire et a une section transversale trapézoïdale.

5. Dispositif selon la revendication 1, caractérisé en ce que le moyen d'actionnement comprend un système à vis mâle et femelle (70, 71).

6. Dispositif selon la revendication 5, caractérisé en ce que le système à vis mâle et femelle comprend une tige filetée axiale (70) portée par un disque de compression (26) qui se trouve en contact frontal avec le joint (28), et un élément (71) à filetage femelle dans lequel est vissée la tige (70), et qui peut être tourné au moyen d'un levier d'actionnement (32a).

7. Dispositif selon la revendication 6, caractérisé en ce que le levier d'actionnement (32a) est connecté à l'élément (71) à filetage femelle par une transmission comprenant un arbre (75), qui peut tourner dans la tige (18), et une paire de pignons coniques (73, 74) reliant l'arbre (18) à l'élément (71) à filetage femelle.

8. Dispositif selon la revendication 7, caractérisé en ce que le levier d'actionnement (32a) est relié à l'arbre (75) avec interposition d'un dispositif à cliquet.
